# EUROPEAN PATENT SPECIFICATION

(11) **EP 2 123 872 B1**
(45) Date of publication and mention of the grant of the patent: **24.08.2011**
(21) Application number: 09006495.7
(22) Date of filing: 13.05.2009
(51) Int. Cl.: F01N 3/022, F01N 3/035, B01D 53/94

(54) **Exhaust gas control apparatus for internal combustion engine**
Abgasentgiftungsvorrichtung für einen Verbrennungsmotor
Appareil de contrôle de gaz d'échappement pour moteur à combustion interne

(30) Priority: 19.05.2008 JP 2008130833; 20.11.2008 JP 2008297202
(43) Date of publication of application: 25.11.2009
(73) Proprietor: Toyota Jidosha Kabushiki Kaisha, Toyota-shi, Aichi-ken 471-8571 (JP)
(72) Inventor: Osaki, Mayuko, Aichi-ken, 471-8571 (JP); Hirata, Hirohito, Aichi-ken, 471-8571 (JP); Ibe, Masaya, Aichi-ken, 471-8571 (JP); Matsubara, Hiroyuki, Aichi-ken, 471-8571 (JP)
(74) Representative: Kuhnen & Wacker

(56) References cited:
- EP-A- 1 538 311
- WO-A-2007/040308
- WO-A-2007/055160
- FR-A- 2 849 670
- JP-A- 2002 276 337

## Description

### BACKGROUND OF THE INVENTION

### 1. Field of the Invention

The invention relates to an exhaust gas control apparatus suitable for use in an internal combustion engine, and more particularly, an exhaust gas control apparatus for an internal combustion engine, which uses active oxygen.

### 2. Description of the Related Art

Japanese Patent Application Publication No. 2007-152336 (JP-A-2007-152336), for example, describes an exhaust gas control apparatus for an internal combustion engine, which adds ozone right before an Ag catalyst that contains Ag as the catalytic component. With this exhaust gas control apparatus, the ozone increases the oxidizing ability of the Ag catalyst, thereby promoting the purification of CO in the exhaust gas.

In this case, the Ag catalyst is arranged downstream of a diesel particulate filter (DPF) and the ozone is supplied to the DPF. Therefore, particulate matter (PM) in the exhaust gas that is trapped in the DPF is burned off by the ozone, and then the exhaust gas is purified using the Ag catalyst.

Incidentally, in the technology described above, it may be desirable to use not only the Ag catalyst, but other catalysts such as a NOₓ catalyst and a three way catalyst, for example, in combination with the Ag catalyst. However, these catalysts typically contain a precious metal such as Pt or Pd as the catalytic component. Such precious metals oxidize when they come into contact with ozone, which tends to make the catalysts less active.

Also, the ozone decomposes when it comes into contact with these precious metals so the ozone ends up being consumed by a different reaction than it was originally intended for. Moreover, the substrate (the base material) of the DPF is formed of an ozone-decomposing ceramic material and the like so the ozone also decomposes and is consumed when it comes into contact with this substrate. Therefore, when another catalyst or purification material of a DPF is used in combination with an exhaust gas control apparatus that includes an Ag catalyst and ozone, it is difficult to determine a suitable layout for the various parts.

On the other hand, the NOₓ catalyst and the three way catalyst and the like described above activate at relatively high temperatures. Therefore, even if these catalysts are used in combination with the Ag catalyst, HC and NOₓ in the exhaust gas may not be able to be efficiently purified in the low temperature range.

The various issues described above are not limited to just Ag. They also arise with catalytic components that display synergistic effects when combined with active oxygen (e.g., ozone), that is, with various catalytic components (such as Au) which oxidize in the presence of active oxygen and free the oxygen at or below the catalyst activation temperature.

### SUMMARY OF THE INVENTION

This invention thus provides an exhaust gas control apparatus for an internal combustion engine, which can efficiently purify unpurified components in exhaust gas and enables the overall layout to be set appropriately when a main catalyst that displays high performance in the presence of active oxygen is used in combination with another purification material and an active oxygen supply apparatus.

A first aspect of the invention relates to an exhaust gas control apparatus for an internal combustion engine. This exhaust gas control apparatus includes i) a main catalyst which is provided in an exhaust passage through which exhaust gas from the internal combustion engine flows and includes a catalytic component capable of freeing oxygen that oxidizes unpurified components at or below a catalyst activation temperature when oxidized by active oxygen, ii) downstream purification material which is arranged downstream of the main catalyst in the direction in which the exhaust gas flows and includes one of a catalyst which purifies an unpurified component in the exhaust gas, or a PM filter that traps particulate matter in the exhaust gas, and iii) an active oxygen supply apparatus that supplies active oxygen to the main catalyst, , wherein the main catalyst and the downstream purification material are integrated to form a composite catalyst, and the downstream purification material is arranged downstream of the main catalyst in the composite catalyst.

According to this first aspect of the invention, CO oxidation activity of the main catalyst starts at a low temperature when both the main catalyst and active oxygen are present. Therefore, if the downstream purification material is a catalyst, for example, and the active oxygen supply apparatus is activated during a cold start of the internal combustion engine or the like, even if this catalyst is not activated, CO can still be efficiently purified by the main catalyst so exhaust gas emissions can be improved. Also, reaction heat is generated when the main catalyst reacts with the active oxygen. This reaction heat can be efficiently transferred to the downstream catalyst by solid heat conduction or the flow of exhaust gas.

Accordingly, supplying active oxygen to the main catalyst not only increases the CO conversion efficiency, but also enables the downstream catalyst to be efficiently heated with the reaction heat generated at that time. As a result, even during a cold start, the downstream catalyst can be activated early. That is, high purification performance is able to be displayed even at a low temperature. As a result, the main catalyst and the downstream catalyst make it possible to reliably improve exhaust gas emissions during startup.

Also, the main catalyst consumes the active oxygen in the exhaust gas before it reaches the downstream catalyst. Therefore, even with a system that uses both the active oxygen supply apparatus and the downstream catalyst, the amount of active oxygen that comes into contact with the downstream catalyst can be sufficiently suppressed, thereby protecting that catalyst from the active oxygen. Accordingly, the metal in the downstream catalyst is prevented from being oxidized by the active oxygen, so the catalyst can be maintained in a highly active state even while active oxygen is being used.

If, on the other hand, the downstream purification material is a PM filter such as a DPF, the active oxygen comes into contact with the main catalyst before it comes into contact with the substrate of the PM filter. That is, the active oxygen can be efficiently supplied to the main catalyst before it is decomposed by coming into contact with the substrate. Accordingly, when the main catalyst and the PM filter are used in combination, it is possible to avoid the amount of active oxygen that is supplied to the main catalyst from decreasing due to the substrate, so the active oxygen can be utilized effectively.

The main catalyst may include at least one of Ag or Au as the catalytic component.

These kinds of catalytic components enable oxygen to be freed at or below the catalyst activation temperature when they are oxidized in the presence of active oxygen. The freed oxygen is then able to react with the unpurified components (such as CO) in the exhaust gas. As a result, unpurified components can be efficiently oxidized so the exhaust gas can be purified even at a low temperature.

The main catalyst and the downstream purification material are integrated to form a composite catalyst, and the downstream purification material may be arranged downstream of the main catalyst in the composite catalyst.

Therefore, the main catalyst and the downstream catalyst are easily able to be close to one another so the heat transfer from the main catalyst to the downstream catalyst can be significantly improved. Also, these catalysts can be arranged in a compact manner so the composite catalyst can be both small and highly efficient.

The downstream purification material may be a catalyst, and the catalyst may be provided in a location to which heat generated by a reaction between the main reaction and the active oxygen can be transferred.

As a result, the reaction heat generated at the location of the main catalyst can be stably transferred to the downstream catalyst, thereby efficiently heating up that catalyst.

The downstream purification material may be a catalyst, and the composite catalyst may include an upstream gas passage and a downstream gas passage. The upstream gas passage may extend in the direction in which the exhaust gas flows, with the upstream end of the upstream gas passage being open and serving as an inlet for the exhaust gas and the downstream end of the upstream gas passage being closed off. The downstream gas passage may extend parallel with the upstream gas passage, with a gas permeable partition wall in between the upstream gas passage and the downstream gas passage. The upstream end of the downstream gas passage may be closed off and the downstream end of the downstream gas passage may be open and serve as an outlet for the exhaust gas. Also, the main catalyst may be provided in the upstream gas passage and the downstream purification material may be provided in the downstream gas passage. Specifically, the main catalyst may be provided on an inner wall surface of the upstream gas passage and the downstream purification material may be provided on an inner wall surface of the downstream gas passage.

In this way, a wallflow composite catalyst can be formed. As a result, the exhaust gas is able to sequentially contact the main catalyst and the downstream catalyst while flowing from the upstream gas passage to the downstream gas passage. In addition, according to this structure, the main catalyst and the downstream catalyst can be adjacent to one another with the thin partition wall in between. Therefore, the two catalysts can be as close to one another as possible so the heat transfer from the main catalyst to the downstream catalyst can be significantly improved.

The downstream purification material may be a catalyst, and the composite catalyst may include a plurality of gas passages which extend in the direction in which the exhaust gas flows and both ends of which are open in the direction in which the exhaust gas flows. Also, the main catalyst may be provided on an upstream portion in the gas passages, and the downstream purification material may be provided on a downstream portion in the gas passages.

The main catalyst can be provided on an upstream portion in the gas passages and the downstream purification material may be provided on a downstream portion in the gas passages, so operational effects that are substantially the same as those described above can be obtained. Also, both ends of the gas passages are open so the structure of the passages in the composite catalyst can be simplified and air-flow resistance of the composite catalyst can be reduced.

The composite catalyst may include an upstream gas passage and a downstream gas passage. The upstream gas passage may extend in the direction in which the exhaust gas flows, with the upstream end of the upstream gas passage being open and serving as an inlet for the exhaust gas and the downstream end of the upstream gas passage being closed off. The downstream gas passage may extend parallel with the upstream gas passage, with a gas permeable partition wall in between the upstream gas passage and the downstream gas passage. The upstream end of the downstream gas passage may be closed off and the downstream end of the downstream gas passage may be open and serve as an outlet for the exhaust gas. The downstream purification material may be a PM filter and the PM filter may form the partition wall between the upstream gas passage and the downstream gas passage. Further, the main catalyst may be provided on an inner wall surface of the upstream gas passage.

In this way, a wallflow composite catalyst can be formed. As a result, the active oxygen can be efficiently supplied to the main catalyst provided on the inner wall surface of the upstream gas passage before it is decomposed by coming into contact with the PM filter formed as the partition wall, so the active oxygen can be utilized effectively

The composite catalyst may include a plurality of gas passages which extend in the direction in which the exhaust gas flows and both ends of which are open in the direction in which the exhaust gas flows, and a partition wall between the plurality of gas passages that are adjacent to one another. The downstream purification material may a PM filter, and the PM filter may form the partition wall. The main catalyst may be provided on inner wall surfaces of upstream portions in the gas passages.

According to this construction, the active oxygen can be efficiently supplied to the main catalyst provided on inner wall surfaces of upstream portions in the gas passages before it is decomposed by coming into contact with the PM filter which forms the inner wall surface of the downstream portions in the gas passages, so the active oxygen can be utilized effectively. Also, both ends of the gas passages are open so the structure of the passages in the composite catalyst can be simplified and air-flow resistance of the composite catalyst can be reduced.

A second aspect of the invention relates to an exhaust gas control apparatus for an internal combustion engine. This exhaust gas control apparatus includes i) a substrate which is provided in an exhaust passage through which exhaust gas from the internal combustion engine flows and includes material that decomposes active oxygen, ii) a main catalyst which is provided only on an upstream portion of the substrate in the direction in which the exhaust gas flows and includes a catalytic component capable of freeing oxygen that oxidizes unpurified components at or below a catalyst activation temperature when oxidized by active oxygen, and iii) an active oxygen supply apparatus that supplies active oxygen to the main catalyst.

The substrate made of ceramic material, for example, decomposes active oxygen on contact. In this case, arranging the main catalyst only on the upstream portion of the substrate enables the active oxygen to come into contact with the main catalyst before it comes into contact with the substrate. That is, the active oxygen can be efficiently supplied to the main catalyst before it is decomposed by coming into contact with the substrate, so the active oxygen can be utilized effectively.

The active oxygen supply apparatus may supply ozone as the active oxygen.

Using ozone as the active oxygen in this way enables the effects described above to be displayed remarkably well.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is an overall block diagram of the system structure according to a first example embodiment of the invention;
FIG. 2 is an enlarged sectional view of a composite catalyst in FIG. 1 enlarged;
FIG. 3 is a partial enlarged sectional view of part of the composite catalyst in FIG. 2 enlarged even more;
FIG. 4 is a characteristic line graph showing the relationship between catalyst temperature and CO conversion efficiency for each of three types of catalysts, one of which contains Ag, one of which contains Pt, and one of which contains Pd;
FIG. 5 is a characteristic line graph showing the relationship between the temperature of exhaust gas flowing into the catalyst and the catalyst temperature for each of three types of catalysts, one of which contains Ag, one of which contains Pt, and one of which contains Pd;
FIG 6 is an enlarged sectional view of a composite catalyst according to a second example embodiment of the invention;
FIG 7 is a partial enlarged sectional view of part of the composite catalyst in FIG. 6 enlarged even more;
FIG 8 is an enlarged sectional view of a DPF in a third example embodiment of the invention;
FIG. 9 is a partial enlarged sectional view of part of the DPF in FIG. 8 enlarged even more;
FIGS. 10A and 10B are characteristic line graphs showing the relationship between the ozone decomposition rate and the presence of ceramic material;
FIG. 11 is an enlarged sectional view of a catalyst device in a fourth example embodiment of the invention; and
FIG. 12 is a partial enlarged sectional view of a portion of the catalyst device in FIG. 11 enlarged even more.

### DETAILED DESCRIPTION OF EMBODIMENTS

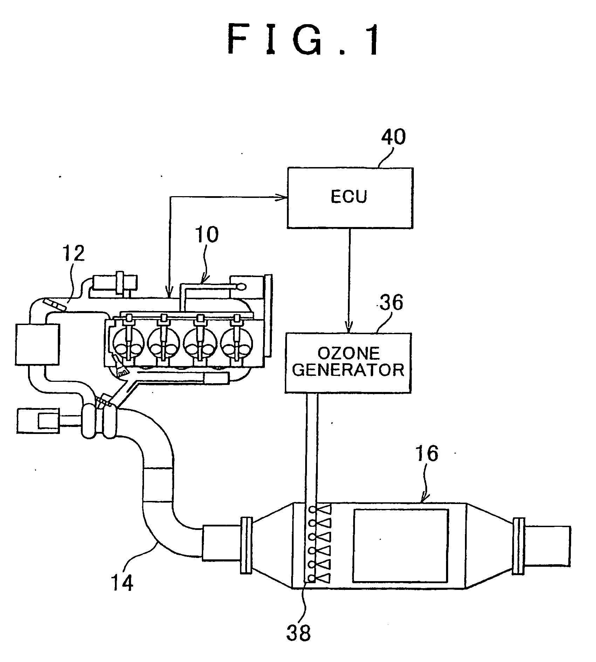

A first example embodiment of the invention will now be described with reference to FIGS. 1 to 5. First, FIG. 1 is an overall block diagram of the system structure according to a first example embodiment. As shown in FIG. 1, the system of this example embodiment includes an internal combustion engine 10 which is a diesel engine, for example. The internal combustion engine 10 has an intake passage 12 through which intake air is drawn into cylinders, and an exhaust passage 14 through which exhaust gas that is discharged from the cylinders flows.

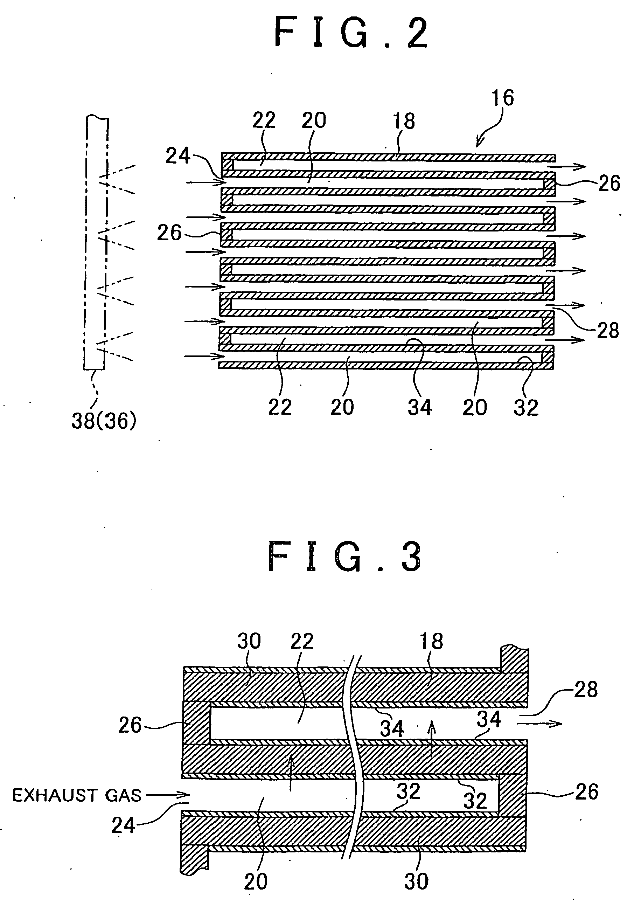

A composite catalyst 16, which is formed by an Ag catalyst 32, which will be described later, that is integrated with a three way catalyst 34, is provided in the exhaust passage 14. FIG. 2 is an enlarged sectional view of the composite catalyst 16 in FIG. 1 enlarged, and FIG. 3 is a partial enlarged sectional view of part of the composite catalyst 16 in FIG. 2 enlarged even more. As shown in these drawings, the composite catalyst 16 has a honeycomb structure 18 made of porous ceramic material or metal material. Some examples of the ceramic material include cordulite, silica, alumina, SiC, and Al₂O₃-TiO₂, and some examples of the metal material include Fe, and Cr.

Also, the honeycomb structure 18 has a wallflow structure and a plurality of gas passages that extend parallel to one another in the direction in which the exhaust gas flows. Some of these gas passages are a plurality of upstream gas passages 20 and the rest of the gas passages are a plurality of downstream gas passages 22. In this case, the upstream end portions of the upstream gas passages 20 are open, and the open portions serve as exhaust gas inlets 24. Also, the downstream end portions of the upstream gas passages 20 are closed off by plugs 26.

On the other hand, the upstream end portions of the downstream gas passages 22 are closed off by other plugs 26. Also, the downstream end portions of the downstream gas passages 22 are open, and the open portions serve as exhaust gas outlets 28. Furthermore, the upstream gas passages 20 and the downstream gas passages 22 are arranged adjacent to one another with gas permeable partition walls 30 that form part of the honeycomb structure 18 between them. Therefore, when the honeycomb structure 18 is arranged in the exhaust passage 14, exhaust gas flows into the upstream gas passages 20 through the inlets 24, passes through the partition walls 30 and flows into the downstream gas passages 22, and then flows out through the outlets 28.

In this example embodiment, an Ag catalyst 32 that serves as a main catalyst is provided in the upstream gas passages 20 of the honeycomb structure 18 and a three way catalyst 34 that serves as downstream purification material is provided in the downstream gas passages 22 of the honeycomb structure 18. An ozone generator 36, which will be described later, supplies ozone to the Ag catalyst 32. As a result, catalyst activity of the three way catalyst 34 can be increased by heating the three way catalyst 34, while efficiently purifying CO in the exhaust gas. These structures and their operational effects will hereinafter be described.

First, the Ag catalyst 32 will be described. The term Ag catalyst is a generic term for a catalyst that contains silver (Ag) as the catalytic component. In this example embodiment, an Ag catalyst in which silver is carried on alumina will be used as an example. The Ag catalyst 32 is adhered to the wall surfaces (i.e., the partition walls 30) of the upstream gas passages 20 by being coated on, for example, as shown in FIG 3.

Incidentally, in this example embodiment, the Ag catalyst 32 is given as an example of the main catalyst, but the invention is not limited to this. For example, an Au catalyst that contains Au (gold) as the catalytic component may also be used. Moreover, the main catalyst may contain a catalytic component other than Ag or Au as long as it oxidizes in the presence of active oxygen and enables oxygen to be freed at or below the catalyst activation temperature.

Using these kinds of catalytic components increases the purification (conversion) efficiency of the catalyst at low temperatures. That is, supplying ozone to the catalytic component at low temperatures enables the oxygen to be freed from the catalytic component, and this oxygen is then able to react with unpurified components (such as CO) in the exhaust gas. As a result, unpurified components can be efficiently oxidized so the exhaust gas can be purified even at a low temperature.

Meanwhile, the three way catalyst 34 contains a metal such as platinum (Pt), palladium (Pd), or rhodium (Rh) as the catalytic component, as is generally known. Also, the three way catalyst 34 is adhered to the wall surfaces (i.e., the partition walls 30) of the downstream gas passages 22 by being coated on, for example, as shown in FIG 3. That is, the three way catalyst 34 is arranged downstream of the Ag catalyst 32 and on the same substrate (i.e., the partition walls 30) as the Ag catalyst 32.

The three way catalyst 34 activates at a temperature equal to or greater than approximately 300°C, and purifies unpurified components such as hydrocarbons (HC), carbon monoxide (CO), and nitrogen oxide (NOₓ) in the exhaust gas. Incidentally, in this example embodiment, the three way catalyst 34 is used as the catalyst that forms the downstream purification material. However, the invention is not limited to this. For example, various kinds of catalysts may be used, including a NOₓ catalyst or the like.

The ozone generator 36 may be regarded as an active oxygen supply apparatus of the invention. The ozone generator 36 adds ozone (O₃) into the exhaust gas from an ozone supply port 38 arranged upstream of the Ag catalyst 32. Any suitable type of ozone generator may be used as the ozone generator 36, such as one which generates ozone while supplying dry air or oxygen as the raw material into a discharge tube to which high voltage can be applied. In this case, the dry air or oxygen as the raw material is a gas such as outside air drawn in from outside the exhaust passage 14.

The operating state of the ozone generator 36 is controlled by an ECU (Electronic Control Unit) 40 that controls the operation of the internal combustion engine 10. That is, the ECU 40 operates the ozone generator 36 at times such as during a cold start of the internal combustion engine, for example. Accordingly, when exhaust gas flows into the upstream gas passages 20 through the inlets 24 of the composite catalyst 16, ozone is added into the exhaust gas from the ozone supply port 38. Then the ozone and the exhaust gas contact the Ag catalyst 32 in the upstream gas passages 20.

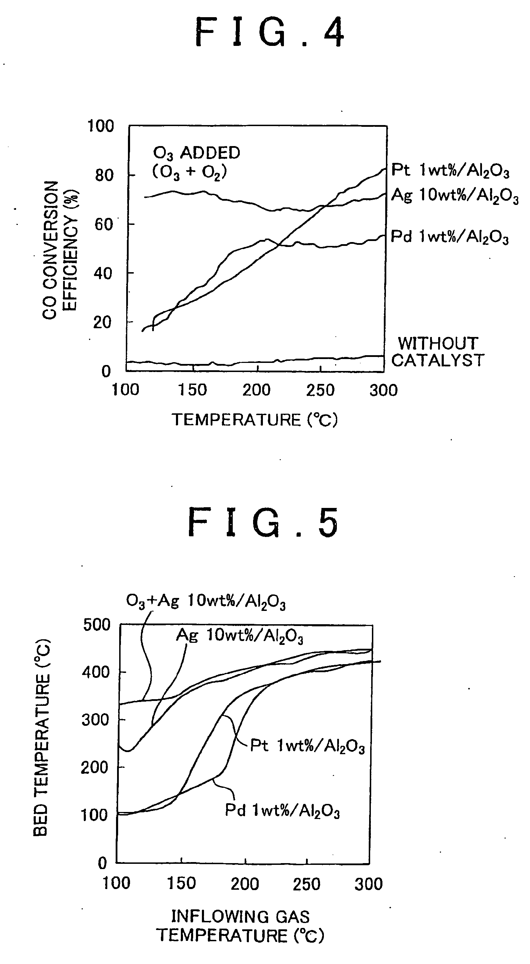

In this way, when both the Ag catalyst 32 and ozone are present, CO oxidation activity of the Ag catalyst 32 begins at a low temperature. FIG. 4 is a characteristic line graph showing the relationship between catalyst temperature and CO conversion efficiency for each of three types of catalysts, one of which contains Ag, one of which contains Pt, and one of which contains Pd. As shown in the graph, in the presence of ozone, the CO conversion efficiency with the Ag catalyst at low temperatures is higher than it is with the catalysts containing other metals (such as Pt and Pd).

More specifically, even at a low temperature of approximately 100°C at which the three way catalyst 34 is inactive, the Ag catalyst 32 and ozone are able to efficiently purify the CO in the exhaust gas. The reason for this is thought to be that the Ag in the catalyst 32 reacts with the ozone and changes to Ag₂O or AgO, which are strong oxidants that oxidize the CO to CO₂.

Therefore, when the ozone generator 36 is activated during a cold start, for example, CO in the exhaust gas can be efficiently oxidized by the ozone and the Ag catalyst 32 having the properties described above. As a result, even if the three way catalyst 34 is inactive, CO can still be stably purified. In particular, when the CO concentration in the exhaust gas is high, exhaust gas emissions can be drastically improved.

Also, when Ag reacts with ozone, reaction heat is generated. Therefore, the exhaust gas that has passed through the area where the Ag catalyst 32 is located is heated by this reaction heat and reaches a higher temperature than it would if the ozone was not present. Because the downstream sides of the upstream gas passages 20 are closed off, this exhaust gas flows through the partition wall 30 and into the downstream gas passages 22 where it reaches the three way catalyst 34. The exhaust gas then heats the three way catalyst 34 as it flows out through the outlets 28.

FIG 5 is a characteristic line graph showing the relationship between the temperature of exhaust gas flowing into the catalyst and the catalyst temperature (i.e., bed temperature) for each of three types of catalysts, one of which contains Ag, one of which contains Pt, and one of which contains Pd. As shown in the drawing, the temperature rises with the Ag catalyst 32 in the presence of ozone compared with the Ag catalyst and the other catalysts when ozone is not present. That is, the Ag catalyst 32 generates reaction heat by reacting with the ozone.

Therefore, in this example embodiment, the three way catalyst 34 is arranged in a location where it can be heated by the reaction heat generated by the Ag catalyst 32. That is, the three way catalyst 34 is arranged downstream of the Ag catalyst 32 and on the same substrate (i.e., on the partition wall 30) as the Ag catalyst 32. Arranging the three way catalyst 34 in this way enables the reaction heat generated by the reaction between the Ag and the ozone to be efficiently transferred to the three way catalyst 34 with the flow of the exhaust gas. Also, the reaction heat generated by the Ag catalyst 32 is conducted to the three way catalyst 34 (through solid heat conduction) also through the partition wall 30, so the reaction heat can be transferred efficiently.

Accordingly, supplying ozone to the Ag catalyst 32 arranged upstream of the three way catalyst 34 not only increases the CO conversion efficiency of the Ag catalyst 32, but also enables the three way catalyst 34 to be efficiently heated using the reaction heat generated at that time. As a result, even during a cold start, the three way catalyst 34 can be activated early, thereby enabling the conversion efficiency of HC, CO, and NOₓ and the like to be quickly increased. That is, the composite catalyst 16 is able to display high purification performance even at a low temperature, thus reliably improving exhaust gas emissions during startup.

Also, the Ag catalyst 32 reacts with the ozone upstream of the three way catalyst 34 so the ozone in the exhaust gas is consumed before it reaches the three way catalyst 34. Therefore, even with a system that uses both the ozone generator 36 and the three way catalyst 34, the amount of ozone that comes into contact with the three way catalyst 34 can be sufficiently suppressed, thereby protecting the three way catalyst 34 from the ozone. Accordingly, the metal such as Pt, Pd, and Ph in the three way catalyst is prevented from being oxidized by the ozone, so the three way catalyst 34 can be maintained in a highly active state even while ozone is being used.

Moreover, in this example embodiment, the wallflow composite catalyst 16 is formed by integrating the Ag catalyst 32 and the three way catalyst 34 with the honeycomb structure 18. As a result, the exhaust gas is able to sequentially contact the Ag catalyst 32 and the downstream catalyst 34 while flowing from the upstream gas passages 20 to the downstream gas passages 22.

In addition, according to this structure, the Ag catalyst 32 and the three way catalyst 34 can be adjacent to one another with the thin partition wall 30 in between. Therefore, the two catalysts 32 and 34 can be as close to one another as possible so the heat transfer from the Ag catalyst 32 to the three way catalyst 34 can be significantly improved. Also, the two types of catalysts 32 and 34 can be arranged in a compact manner on the honeycomb structure 18 so the composite catalyst 16 can be both small and highly efficient.

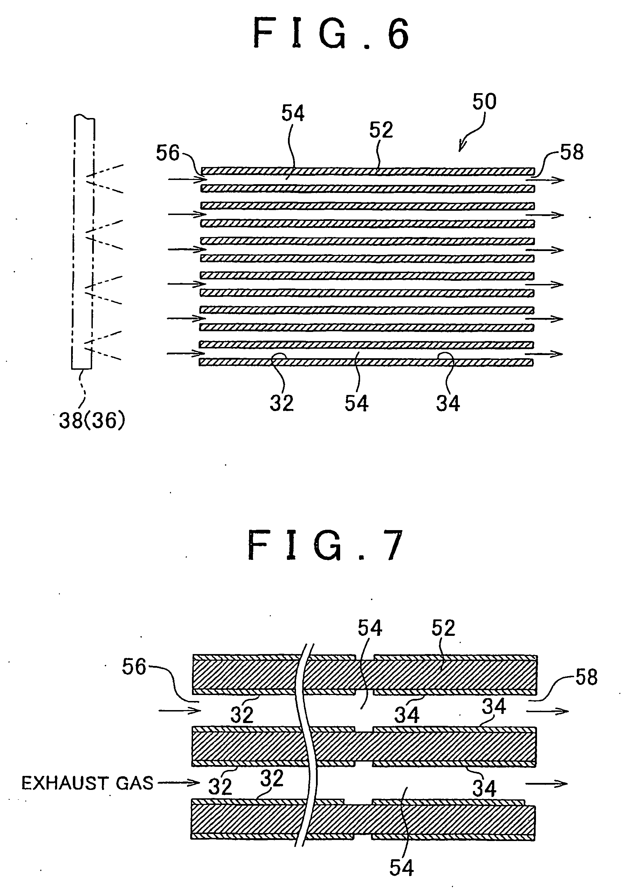

Next, a second example embodiment of the invention will be described with reference to FIGS. 6 and 7. This example embodiment employs generally the same system structure (see FIG 1) as that of the first example embodiment described above. However, the structure of the composite catalyst in this second example embodiment is different than it is in the first example embodiment. Incidentally, constituent elements in this second example embodiment that are the same as constituent elements in the first example embodiment will be denoted by the same reference characters and descriptions of those elements will be omitted.

This example embodiment employs a composite catalyst 50 made of porous ceramic material, substantially similar to the first example embodiment. FIG. 6 is an enlarged sectional view of the composite catalyst according to the second example embodiment, and FIG. 7 is a partial enlarged sectional view of part of the composite catalyst in FIG. 6 enlarged even more.

As shown in these drawings, the composite catalyst 50 has a honeycomb structure 52 in which a plurality of gas passages 54 are formed extending parallel to one another in the direction in which the exhaust gas flows. However, both ends of each of the gas passages 54 in the direction in which the exhaust gas flows are open, with one open portion serving as an inlet 56 and the other open portion serving as an outlet 58.

An Ag catalyst 32 is provided on an upstream portion of the gas passages 54 and a three way catalyst 34 is provided on a downstream portion of the gas passages 54. These catalysts 32 and 34 are adhered to the peripheral walls (i.e., the honeycomb structure 52) of the gas passages 54 by the same method as in the first. example embodiment. Also, the term "upstream portion" in this description refers to a portion closer to the inlet 56 than the outlet 58 (i.e., between the inlet 56 and a point halfway between the inlet 56 and the outlet 58), and the term "downstream portion" in this description refers to a portion closer to the outlet 58 than the inlet 56 (i.e., between the halfway point and the outlet 58).

The example embodiment structured in this way is also able to obtain substantially the same operational effects as the first example embodiment described above. In particular, in this example embodiment, both ends of the gas passages 54 are open so the structure of the passages in the honeycomb structure 52 can be simplified and air-flow resistance of the composite catalyst 50 can be reduced.

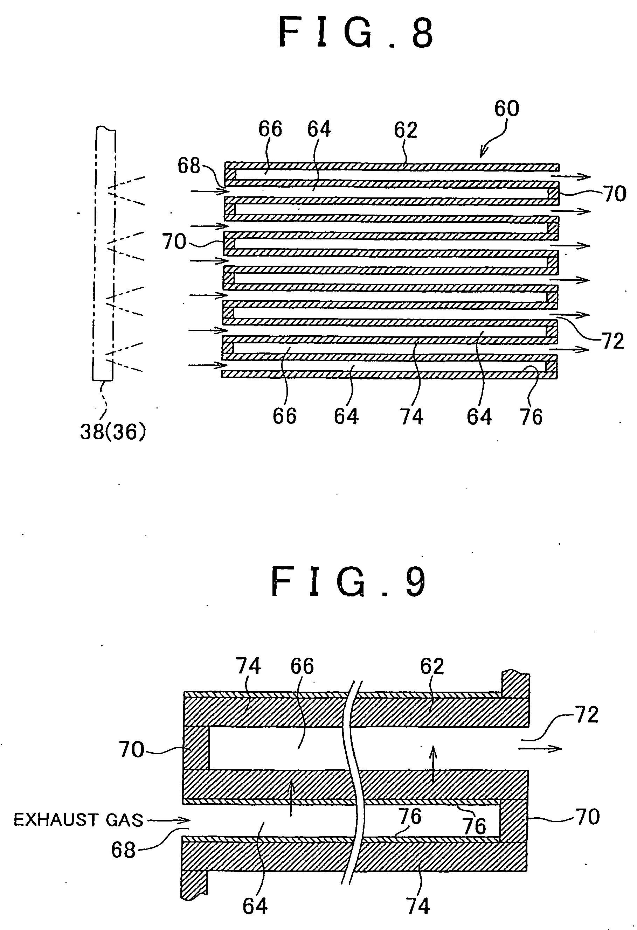

Next, a third example embodiment of the invention will be described with reference to FIGS. 8 to 10. This example embodiment employs generally the same system structure (see FIG. 1) as that of the first example embodiment described above. However, this third example embodiment differs from the first example embodiment in that it uses a PM filter (DPF) as the downstream purification material. Incidentally, constituent elements in this third example embodiment that are the same as constituent elements in the first example embodiment will be denoted by the same reference characters and descriptions of those elements will be omitted.

FIG. 8 is an enlarged sectional view of the DPF in this third example embodiment of the invention, and FIG. 9 is a partial enlarged sectional view of part of the DPF in FIG. 8 enlarged even more. As shown in these drawings, a composite catalyst 60 is formed by a wallflow DPF 62 and an Ag catalyst 76, which will be described later, that are integrated. Also, the DPF 62 is made of porous ceramic material or the like, substantially similar to the honeycomb structure 18 in the first example embodiment. Some examples of the ceramic material include cordulite, SiC, alumina (Al₂O₃), TiO₂, Fe, Cr, silica, and ceria-zirconia (CeO₂-ZrO₂). The DPF 62 has upstream gas passages 64, downstream gas passages 66, inlets 68, plugs 70, outlets 72, and partition walls 74 and the like.

In the DPF 62 structured in his way, exhaust gas flows into the upstream gas passages 64 through the inlets 68, passes through the partition walls 74 and into the downstream gas passages 66, and then flows out through the outlets 72. At this time, particulate matter (PM) in the exhaust gas becomes trapped in the pores in the partition walls 74. This trapped PM can be oxidized using ozone, as will be described later. Therefore, the DPF 62 is able to purify PM in the exhaust gas.

Meanwhile, the Ag catalyst 76 is similar to the catalyst in the first example embodiment and is provided only in the upstream gas passage 64 of the DPF 62, as shown in FIG. 9. That is, the DPF 62 is arranged downstream of the Ag catalyst 76. Therefore, when ozone is supplied upstream of the composite catalyst 60, this ozone reaches the Ag catalyst 76 first and contributes to the oxidation of CO. Then ozone that has not contributed to the oxidation of CO flows into the partition wall 74 of the DPF 62 and oxidizes the trapped PM.

The example embodiment structured in this way is also able to obtain substantially the same operational effects as the first example embodiment described above. That is, even at a low temperature such as during a cold start, CO is able to be efficiently purified by the Ag catalyst 76 so exhaust gas emissions can be improved. In particular, in this example embodiment, the Ag catalyst 76, which is used in combination with the DPF 62 to form the composite catalyst 60, is arranged only in the upstream gas passages 64 of the DPF 62, which yields the following effects.

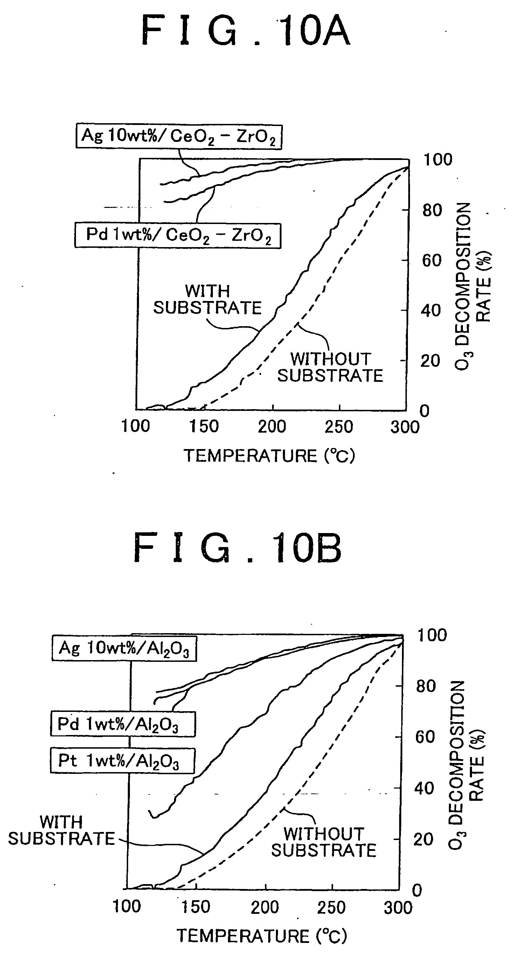

First, the ceramic substrate that forms the DPF 62 decomposes ozone on contact. FIGS. 10A and 10B are characteristic line graphs showing the relationship between the ozone decomposition rate and the presence of ceramic material. Ceria-zirconia (CeO₂-ZrO₂) shown in FIG. 10A and alumina (Al₂O₅) shown in FIG. 10B are used as examples of the substrate (i.e., the ceramic material) that the ozone comes into contact with. As shown in FIGS. 10A and 10B, the decomposition rate rises when the ozone comes into contact with the substrate (as shown by the solid line) compared when the ozone does not come into contact with the substrate (as shown by the dotted line).

Given this property of the substrate, in this example embodiment, the DPF 62 is arranged downstream of the Ag catalyst 76. As a result, the ozone supplied from upstream comes into contact with the Ag catalyst 76 before it comes into contact with the substrate of the DPF 62. That is, the ozone can be efficiently supplied to the Ag catalyst 76 before it is decomposed by coming into contact with the substrate. Accordingly, when the Ag catalyst 76 and the DPF 62 are used in combination, it is possible to avoid the amount of ozone that is supplied to the Ag catalyst 76 from decreasing due to the substrate, so the ozone can be utilized effectively.

Also, another effect of this example embodiment is that the ozone that has not reacted with the Ag catalyst 76 can be supplied to the DPF 62. As a result, PM trapped in the partition walls 74 of the DPF 62 can be oxidized by the ozone. Therefore,
a single ozone generator 36 is able to both purify CO and regenerate the DPF 62, thereby enabling the ozone to be utilized effectively.

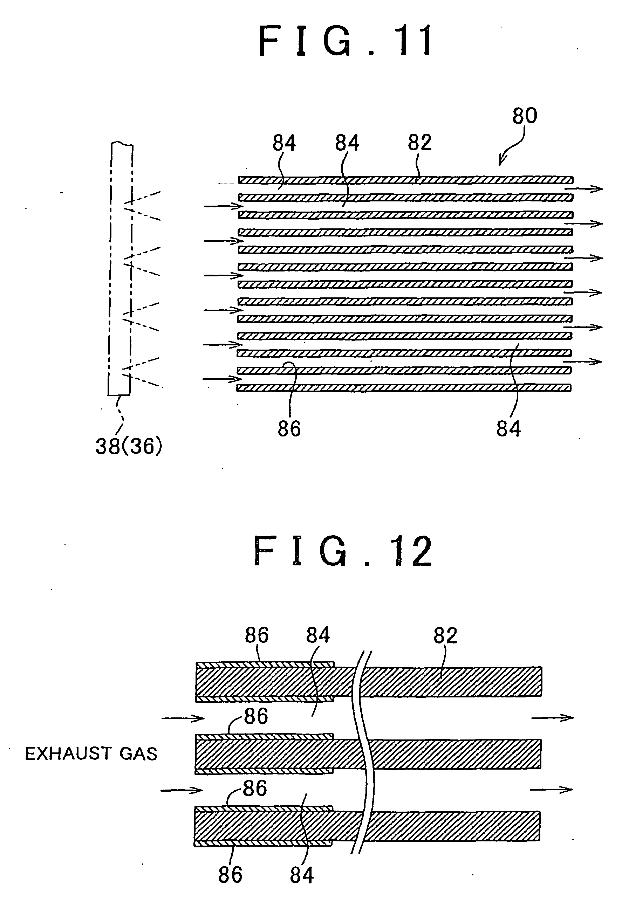

Next, a fourth example embodiment of the invention will be described with reference to FIGS. 11 and 12. This fourth example embodiment employs generally the same system structure (see FIG. 1) as that of the first example embodiment described above. However, this fourth example embodiment differs from the first example embodiment in that the main catalyst is arranged only on an upstream portion of a substrate referred to as a straight flow-type substrate. Incidentally, constituent elements in this fourth example embodiment that are the same as constituent elements in the first example embodiment will be denoted by the same reference characters and descriptions of those elements will be omitted.

FIG. 11 is an enlarged sectional view of a catalyst device in the fourth example embodiment of the invention, and FIG 12 is a partial enlarged sectional view of a portion of the catalyst device in FIG. 11 enlarged even more. As shown in these drawings, a catalyst device 80 has a straight flow-type substrate 82. In this case, a plurality of gas passages 84 are formed in the substrate 82. These gas passages 84 extend in the direction in which the exhaust gas flows and are open at both ends in that direction. Also, the substrate 82 is made of a ceramic material such as ceria-zirconia (CeO₂-ZrO₂), alumina (Al₂O₃), cordulite, or silica, for example.

Also, the catalyst device 80 has an Ag catalyst 86 arranged on the substrate 82. The Ag catalyst 86 is similar to the catalyst in the first example embodiment and is provided only on an upstream portion of the substrate 82 in the direction in which the exhaust gas flows, as shown in FIG. 12.

The example embodiment structured in this way is also able to obtain substantially the same operational effects as the third example embodiment described above. That is, in this example embodiment, the Ag catalyst 86 is arranged only on an upstream portion of the substrate 82 that decomposes ozone. As a result, ozone can be efficiently supplied to the Ag catalyst 86 before it is decomposed by coming into contact with the substrate 82.

Incidentally, in the example embodiment described above, a case is described in which the Ag catalyst 32 and the three way catalyst 34 are integrated as the so-called wallflow composite catalyst 16. However, it is not absolutely necessary to integrate the Ag catalyst (i.e., the main catalyst) with the downstream purification material. That is, the main catalyst and the downstream purification material may each be formed as separate purification devices, and these purification devices may be arranged near one another, for example. In this case, the substrates (i.e., honeycomb structures or the like) of the purification devices are no longer involved with the transfer of heat from the main catalyst to the downstream purification material (i.e., catalyst). Instead, this heat transfer is performed by the exhaust gas, so substantially the same operation effects as those obtained with the example embodiments described above can be obtained.

Also, in the first example embodiment, exhaust gas flows through the partition walls 30 of the composite catalyst 16 (i.e., the honeycomb structure 18). In this case, the composite catalyst 16 may be a diesel particulate filter (DPF) that traps particulate matter (PM) in the exhaust gas with the partition walls 30. The trapped or collected PM can then be burned off by the ozone.

Also, in the example embodiment described above, a case is described in which the three way catalyst 34 is a catalyst that forms the downstream purification material. However, the downstream catalyst in the invention is not limited to this. For example, a NOₓ catalyst or another type of catalyst may be used.

Also, in the example embodiments, the Ag catalysts 32, 76, and 86 are used. However, the catalyst in the invention is not limited to an Ag catalyst. More specifically, in the invention, any appropriate catalyst may be used as the main catalyst at least as long as oxygen can be freed at or below the catalyst activation temperature while the catalyst is being oxidized by ozone (i.e., as long as the catalyst is made of material that can easily return from an oxidized state to its original state by freeing oxygen). Therefore, an Au catalyst that uses Au as the catalytic component or any of a wide variety of catalysts having an organic catalyst, a metal complex, or a metal component such as Cu, Pt, or Rh or the like as the catalytic component may be used as the main catalyst of the invention.

Also, in the example embodiments, ozone is given as an example of the active oxygen that is added into the exhaust gas. However, the invention is not limited to this. For example, instead of ozone, other kinds of active oxygen (such as negative oxygen ions expressed by O-, O²⁻, O₂⁻, O₃⁻, and Oₙ⁻ and the like) may be added into the exhaust gas.

Also, in the example embodiment described above, the ozone generator 36 is provided outside the exhaust gas flow path and separate from the Ag catalyst 32. However, the invention is not limited to this. For example, the ozone generator may also be arranged in the exhaust gas flow path or in the main catalyst. If one of these arrangements is used, plasma may be generated by high voltage discharge or the like in purification equipment or in the exhaust gas flow path, and this plasma may be used to generate active oxygen (such as ozone).

Further, in the example embodiments, the invention is applied to the internal combustion engine 10 which is a diesel engine. However, the invention is not limited to this. For example, the invention may be widely applied to various types of internal combustion engines including gasoline engines, for example.

## Claims

1. An exhaust gas control apparatus for an internal combustion engine (10), **characterized by** comprising:
a main catalyst (32, 76, 86) which is provided in an exhaust passage (14) through which exhaust gas from the internal combustion engine flows and includes a catalytic component capable of freeing oxygen that oxidizes unpurified components at or below a catalyst activation temperature when oxidized by active oxygen;
downstream purification material (34, 62) which is arranged downstream of the main catalyst in the direction in which the exhaust gas flows and includes one of a catalyst (34) which purifies an unpurified component in the exhaust gas, or a PM filter that traps particulate matter in the exhaust gas; and
an active oxygen supply apparatus (36) that supplies active oxygen to the main catalyst,
wherein the main catalyst and the downstream purification material are integrated to form a composite catalyst (16, 50, 60, 80), and the downstream purification material is arranged downstream of the main catalyst in the composite catalyst.

2. The exhaust gas control apparatus according to claim 1, wherein the main catalyst includes at least one of Ag or Au as the catalytic component.

3. The exhaust gas control apparatus according to any one of claims I to 2, wherein the downstream purification material is the catalyst, and the catalyst is provided in a location to which heat generated by a reaction between the main catalyst and the active oxygen can be transferred.

4. The exhaust gas control apparatus according to claim 1, wherein the downstream purification material is the catalyst; the composite catalyst (16) includes an upstream gas passage (20) which extends in the direction in which the exhaust gas flows, the upstream end of the upstream gas passage (20) being open and serving as an inlet for the exhaust gas and the downstream end of the upstream gas passage (20) being closed off, and a downstream gas passage (22) which extends parallel with the upstream gas passage, with a gas permeable partition wall (30) in between the upstream gas passage and the downstream gas passage, the upstream end of the downstream gas passage (22) being closed off and the downstream end of the downstream gas passage (22) being open and serving as an outlet for the exhaust gas; and the main catalyst is provided in the upstream gas passage and the downstream purification material is provided in the downstream gas passage.

5. The exhaust gas control apparatus according to claim 4, wherein the main catalyst is provided on an inner wall surface of the upstream gas passage and the downstream purification material is provided on an inner wall surface of the downstream gas passage.

6. The exhaust gas control apparatus according to claim 1, wherein the downstream purification material is the catalyst; the composite catalyst (16) includes a plurality of gas passages (54) which extend in the direction in which the exhaust gas flows and both ends of which are open in the direction in which the exhaust gas flows; the main catalyst is provided on an upstream portion in the gas passages; and the downstream purification material is provided on a downstream portion in the gas passages.

7. The exhaust gas control apparatus according to claim 1, wherein the composite catalyst (60) includes an upstream gas passage (68) which extends in the direction in which the exhaust gas flows, the upstream end of the upstream gas passage (68) being open and serving as an inlet for the exhaust gas and the downstream end of the upstream gas passage (68) being closed off, and a downstream gas passage (72) which extends parallel with the upstream gas passage, with a gas permeable partition wall (74) in between the upstream gas passage and the downstream gas passage, the upstream end of the downstream gas passage (72) being closed off and the downstream end of the downstream gas passage (72) being open and serving as an outlet for the exhaust gas; the downstream purification material is the PM filter, the PM filter forming the partition wall between the upstream gas passage and the downstream gas passage; and the main catalyst is provided on an inner wall surface of the upstream gas passage.

8. The exhaust gas control apparatus according to claim 1, wherein the composite catalyst (60) includes a plurality of gas passages (84) which extend in the direction in which the exhaust gas flows and both ends of which are open in the direction in which the exhaust gas flows, and a partition wall (82) between the plurality of gas passages that are adjacent to one another; the downstream purification material is the PM filter, the PM filter forming the partition wall; and the main catalyst is provided on inner wall surfaces of upstream portions in the gas passages.

9. An exhaust gas control apparatus for an internal combustion engine, **characterized by** comprising:
a substrate (62, 82) which is provided in an exhaust passage (14) through which exhaust gas from the internal combustion engine flows and includes material that decomposes active oxygen;
a main catalyst (76, 86) which is provided only on an upstream portion of the substrate in the direction in which the exhaust gas flows and includes a catalytic component capable of freeing oxygen that oxidizes unpurified components at or below a catalyst activation temperature when oxidized by active oxygen; and
an active oxygen supply apparatus (36) that supplies active oxygen to the main catalyst.

10. The exhaust gas control apparatus according to any one of claims 1 to 9, wherein the active oxygen supply apparatus supplies ozone as the active oxygen.

## Patentansprüche

1. Abgassteuervorrichtung für einen Verbrennungsmotor (10), **dadurch gekennzeichnet, dass** sie aufweist:
einen Hauptkatalysator (32, 76, 86), der in einer Abgasleitung (14) vorgesehen ist, durch die Abgas vom Verbrennungsmotor strömt, und der eine katalytische Komponente aufweist, die in der Lage ist, bei oder unter einer Katalysatoraktivierungstemperatur Sauerstoff freizusetzen, der ungereinigte Komponenten oxidiert, wenn sie durch aktiven Sauerstoff oxidiert wurde;
ein stromabwärts befindliches Reinigungsmaterial (34, 62), das in der Richtung, in der das Abgas strömt, stromabwärts vom Hauptkatalysator angeordnet ist und das einen Katalysator (34), der eine ungereinigte Komponente im Abgas reinigt, oder einen Partikelfilter beinhaltet, der teilchenförmiges Material im Abgas einfängt; und
eine Zufuhrvorrichtung (36) für aktiven Sauerstoff, die aktiven Sauerstoff zum Hauptkatalysator liefert,
wobei der Hauptkatalysator und das stromabwärts befindliche Reinigungsmaterial integriert sind, um einen Verbundkatalysator (16, 50, 60, 80) zu bilden, und wobei das stromabwärts befindliche Reinigungsmaterial stromabwärts vom Hauptkatalysator im Verbundkatalysator angeordnet ist.

2. Abgassteuervorrichtung nach Anspruch 1, wobei der Hauptkatalysator Ag und/ oder Au als katalytische Komponente beinhaltet.

3. Abgassteuervorrichtung nach einem der Ansprüche 1 bis 2, wobei das stromabwärts befindliche Reinigungsmaterial der Katalysator ist, und wobei der Katalysator an einer Stelle vorgesehen ist, zu der Wärme, die durch eine Reaktion zwischen dem Hauptkatalysator und dem aktiven Sauerstoff entsteht, übertragen werden kann.

4. Abgassteuervorrichtung nach Anspruch 1, wobei das stromabwärts befindliche Reinigungsmaterial der Katalysator ist; wobei der Verbundkatalysator (16) beinhaltet: eine stromaufwärts befindliche Gasleitung (20), die in der Richtung verläuft, in der das Abgas strömt, wobei das stromaufwärts befindliche Ende der stromaufwärts befindlichen Gasleitung (20) offen ist und als Einlass für das Abgas dient, und das stromabwärts befindliche Ende der stromaufwärts befindlichen Gasleitung (20) abgeschlossen ist, sowie eine stromabwärts befindliche Gasleitung (22), die parallel zur stromaufwärts befindlichen Gasleitung verläuft, mit einer gasdurchlässigen Trennwand (30) zwischen der stromaufwärts befindlichen Gasleitung und der stromabwärts befindlichen Gasleitung, wobei das stromaufwärts befindliche Ende der stromabwärts befindlichen Gasleitung (22) abgeschlossen ist und das stromabwärts befindliche Ende der stromabwärts befindlichen Gasleitung offen ist und als Auslass für das Abgas dient; und wobei der Hauptkatalysator in der stromaufwärts befindlichen Gasleitung vorgesehen ist und das stromabwärts befindliche Reinigungsmaterial in der stromabwärts befindlichen Gasleitung vorgesehen ist.

5. Abgassteuervorrichtung nach Anspruch 4, wobei der Hauptkatalysator auf einer Innenwandfläche der stromaufwärts befindlichen Gasleitung vorgesehen ist und das stromabwärts befindliche Reinigungsmaterial auf einer Innenwandfläche der stromabwärts befindlichen Gasleitung vorgesehen ist.

6. Abgassteuervorrichtung nach Anspruch 1, wobei das stromabwärts befindliche Reinigungsmaterial der Katalysator ist; wobei der Verbundkatalysator (16) eine Mehrzahl von Gasleitungen (54) aufweist, die in der Richtung verlaufen, in der das Abgas strömt; wobei der Hauptkatalysator an einem stromaufwärts befindlichen Abschnitt in den Gasleitungen vorgesehen ist; und wobei das stromabwärts befindliche Reinigungsmaterial an einem stromabwärts befindlichen Abschnitt in den Gasleitungen vorgesehen ist.

7. Abgassteuervorrichtung nach Anspruch 1, wobei der Verbundkatalysator (60) beinhaltet: eine stromaufwärts befindliche Gasleitung (68) aufweist, die in der Richtung verläuft, in der das Abgas strömt, wobei das stromaufwärts befindliche Ende der stromaufwärts befindlichen Gasleitung (20) offen ist und als Einlass für das Abgas dient, und das stromabwärts befindliche Ende der stromaufwärts befindlichen Gasleitung (68) abgeschlossen ist, sowie eine stromabwärts befindliche Gasleitung (72), die parallel zur stromaufwärts befindlichen Gasleitung verläuft, mit einer gasdurchlässigen Trennwand (74) zwischen der stromaufwärts befindlichen Gasleitung und der stromabwärts befindlichen Gasleitung, wobei das stromaufwärts befindliche Ende der stromabwärts befindlichen Gasleitung (72) abgeschlossen ist und das stromabwärts befindliche Ende der stromabwärts befindlichen Gasleitung (72) offen ist und als Auslass für das Abgas dient; wobei das stromabwärts befindliche Reinigungsmaterial der PM-Filter ist, wobei der PM-Filter die Trennwand zwischen der stromaufwärts befindlichen Gasleitung und der stromabwärts befindlichen Gasleitung bildet; und wobei der Hauptkatalysator auf einer Innenwandfläche der stromaufwärts befindlichen Gasleitung vorgesehen ist.

8. Abgassteuervorrichtung nach Anspruch 1, wobei der Verbundkatalysator (60) beinhaltet: eine Mehrzahl von Gasleitungen (84), die in der Richtung verlaufen, in der das Abgas strömt, und deren beide Enden in der Richtung offen sind, in der das Abgas strömt, sowie eine Trennwand (82) zwischen der Mehrzahl von Gasleitungen, die aneinander angrenzen; wobei das stromabwärts befindliche Reinigungsmaterial der PM-Filter ist, der PM-Filter die Trennwand bildet; und der Hauptkatalysator auf Innenwandflächen von stromaufwärts befindlichen Abschnitten in den Gasleitungen vorgesehen ist.

9. Abgassteuervorrichtung für einen Verbrennungsmotor, **dadurch gekennzeichnet, dass** sie aufweist:
einen Träger (62, 82), der in einer Abgasleitung (14) vorgesehen ist, durch die Abgas vom Verbrennungsmotor strömt, und der ein Material beinhaltet, das aktiven Sauerstoff abbaut;
einen Hauptkatalysator (76, 86), der, bezogen auf die Richtung, in der das Abgas strömt, nur an einem stromaufwärts befindlichen Abschnitt des Trägers vorgesehen ist und eine katalytische Komponente aufweist, die in der Lage ist, bei oder unter einer Katalysatoraktivierungstemperatur Sauerstoff freizusetzen, der ungereinigte Komponenten oxidiert, wenn sie durch aktiven Sauerstoff oxidiert wurde;
und
eine Zuführvorrichtung (36) für aktiven Sauerstoff, die aktiven Sauerstoff zum Hauptkatalysator liefert.

10. Abgassteuervorrichtung nach einem der Ansprüche 1 bis 9, wobei die Zufuhrvorrichtung für aktiven Sauerstoff Ozon als aktiven Sauerstoff liefert.

## Revendications

1. Appareil de commande de gaz d'échappement pour un moteur à combustion interne (10), **caractérisé en ce qu'**il comporte :
un catalyseur principal (32, 76, 86) qui est prévu dans un passage d'échappement (14) à travers lequel du gaz d'échappement provenant du moteur à combustion interne s'écoule et comprend un composant catalytique capable de libérer de l'oxygène qui oxyde des composants non purifiés à ou en-dessous d'une température d'activation de catalyseur une fois oxydé par de l'oxygène actif ;
une matière de purification en aval (34, 62) qui est disposée en aval du catalyseur principal dans la direction dans laquelle le gaz d'échappement s'écoule et comprend un d'un catalyseur (34) qui purifie un composant non purifié dans le gaz d'échappement, ou d'un filtre à particules qui piège de la matière en particules dans le gaz d'échappement ; et
un appareil d'alimentation en oxygène actif (36) qui délivre de l'oxygène actif au catalyseur principal,
le catalyseur principal et la matière de purification en aval étant intégrés afin de former un catalyseur composite (16, 50, 60, 80), et la matière de purification en aval étant disposée en aval du catalyseur principal dans le catalyseur composite.

2. Appareil de commande de gaz d'échappement selon la revendication 1, dans lequel le catalyseur principal comprend au moins un de AG ou Au comme composant catalytique.

3. Appareil de commande de gaz d'échappement selon l'une quelconque des revendications 1 à 2, dans lequel la matière de purification en aval est le catalyseur, et le catalyseur est prévu dans un emplacement dans lequel de la chaleur générée par une réaction entre le catalyseur principal et l'oxygène actif peut être transférée.

4. Appareil de commande de gaz d'échappement selon la revendication 1, dans lequel la matière de purification en aval est le catalyseur ; le catalyseur composite (16) comprend un passage de gaz amont (20) qui s'étend dans la direction dans laquelle le gaz d'échappement s'écoule, l'extrémité amont du passage de gaz amont (20) étant ouvert et servant d'entrée pour le gaz d'échappement et l'extrémité aval du passage de gaz amont (20) étant fermée, et un passage de gaz aval (22) qui s'étend en parallèle avec le passage de gaz amont, avec une paroi de séparation perméable au gaz (30) entre le passage de gaz amont et le passage de gaz aval, l'extrémité amont du passage de gaz aval (22) étant fermée et l'extrémité aval du passage de gaz aval (22) étant ouverte et servant de sortie pour le gaz d'échappement ; et le catalyseur principal est prévu dans le passage de gaz amont et la matière de purification en aval est prévue dans le passage de gaz aval.

5. Appareil de commande de gaz d'échappement selon la revendication 4, dans lequel le catalyseur principal est prévu sur une surface de paroi intérieure du passage de gaz amont et la matière de purification en aval est prévue sur une surface de paroi intérieure du passage de gaz aval.

6. Appareil de commande de gaz d'échappement selon la revendication 1, dans lequel la matière de purification en aval est le catalyseur ; le catalyseur composite (16) comprend une pluralité de passages de gaz (54) qui s'étendent dans la direction dans laquelle le gaz d'échappement s'écoule et dont les deux extrémités sont ouvertes dans la direction dans laquelle le gaz d'échappement s'écoule ; le catalyseur principal est prévu sur une partie amont dans les passages de gaz ; et la matière de purification en aval est prévue sur une partie aval dans les passages de gaz.

7. Appareil de commande de gaz d'échappement selon la revendication 1, dans lequel le catalyseur composite (60) comprend un passage de gaz amont (68) qui s'étend dans la direction dans laquelle le gaz d'échappement s'écoule, l'extrémité amont du passage de gaz amont (68) étant ouverte et servant d'entrée pour le gaz d'échappement et l'extrémité aval du passage de gaz amont (68) étant fermée, et un passage de gaz aval (72) qui s'étend en parallèle avec le passage de gaz amont, avec une paroi de séparation perméable au gaz (74) entre le passage de gaz amont et le passage de gaz aval, l'extrémité amont du passage de gaz aval (72) étant fermée et l'extrémité aval du passage de gaz aval (72) étant ouverte et servant de sortie pour le gaz d'échappement ; la matière de purification en aval est le filtre à particules, le filtre à particules formant la paroi de séparation entre le passage de gaz amont et le passage de gaz aval ; et le catalyseur principal est prévu sur une surface de paroi intérieure du passage de gaz amont.

8. Appareil de commande de gaz d'échappement selon la revendication 1, dans lequel le catalyseur composite (60) comprend une pluralité de passages de gaz (84) qui s'étendent dans la direction dans laquelle le gaz d'échappement s'écoule et dont les deux extrémités sont ouvertes dans la direction dans laquelle le gaz d'échappement s'écoule, et une paroi de séparation (82) entre la pluralité de passages de gaz qui sont adjacents l'un à l'autre ; la matière de purification en aval est le filtre à particules, le filtre à particules formant la paroi de séparation ; et le catalyseur principal est prévu sur les surfaces de paroi intérieure des parties amont dans les passages de gaz.

9. Appareil de commande de gaz d'échappement pour un moteur à combustion interne, **caractérisé en ce qu'**il comporte :
un substrat (62, 82) qui est prévu dans un passage d'échappement (14) à travers lequel le gaz d'échappement du moteur à combustion interne s'écoule et comprend une matière qui décompose de l'oxygène actif ;
un catalyseur principal (76, 86) qui est prévu seulement sur une partie amont du substrat dans la direction dans laquelle le gaz d'échappement s'écoule et comprend un composant catalytique capable de libérer de l'oxygène qui oxyde des composants non purifiés à ou en-dessous d'une température d'activation de catalyseur une fois oxydé par l'oxygène actif ; et
un appareil d'alimentation en oxygène actif (36) qui délivre de l'oxygène actif au catalyseur principal.

10. Appareil de commande de gaz d'échappement selon l'une quelconque des revendications 1 à 9, dans lequel l'appareil d'alimentation en oxygène actif délivre de l'ozone comme oxygène actif.
